# EUROPEAN PATENT SPECIFICATION

(11) **EP 3 736 880 B1**
(45) Date of publication and mention of the grant of the patent: **07.07.2021**
(21) Application number: 19173617.2
(22) Date of filing: 09.05.2019
(51) Int. Cl.: H01M 2/16, H01M 10/0525

(54) **SEPARATOR AND LITHIUM ION BATTERY**
SEPARATOR UND LITHIUMIONENBATTERIE
SÉPARATEUR ET BATTERIE AU LITHIUM-ION

(43) Date of publication of application: 11.11.2020
(73) Proprietor: Ningde Amperex Technology Limited, Ningde City, Fujian Province, 352100 (CN)
(72) Inventor: XIAO, Liangzhen, Jiaocheng District, Ningde City, Fujian Province, 352100 (CN); WANG, Kefei, Jiaocheng District, Ningde City, Fujian Province, 352100 (CN); ZENG, Qiao, Jiaocheng District, Ningde City, Fujian Province, 352100 (CN)
(74) Representative: Klunker IP Patentanwälte PartG mbB

(56) References cited:
- WO-A1-2018/217990
- US-A1- 2008 118 827
- US-A1- 2013 236 765
- US-A1- 2017 033 346
- Nicolas Fedelich: "Application Handbook Thermal Analysis of Polymers Selected Applications Thermal Analysis", , 1 January 2013 (2013-01-01), XP055608279, Retrieved from the Internet: URL:https://www.mt.com/dam/LabDiv/guides-g len/ta-polymer/TA_Polymers_Selected_Apps_E N.pdf [retrieved on 2019-07-24]

## Description

### FIELD OF THE APPLICATION

The present application relates to the field of battery, in particular, to a separator and lithium ion battery.

### BACKGROUND OF THE APPLICATION

A separator is an important component of the lithium ion battery. In the lithium ion battery, it mainly functions to isolate the positive and negative electrodes, prevents the direct contact and short circuit between the positive and negative electrodes, and also function to conduct lithium ions. Therefore, the performance of the separator greatly affects the overall performance of the lithium ion battery, especially the safety performance. At present, the requirement for rate performance of lithium-ion batteries become higher and higher in pursue of high energy density, resulting in poor thermal stability and safety performance (such as heavy impact resistance) of lithium ion batteries. Therefore, there is an urgent need for a separator that can improve the thermal stability and safety performance (for example, heavy impact resistance) of a lithium ion battery while ensuring the rate performance of the lithium ion battery.

WO/2018/217990 A1 and US 2017/033346 A1 disclose battery separators having a microporous membrane having different tensile strengths of the separator.

### SUMMARY OF THE APPLICATION

The present application provides a lithium ion battery having a separator composed of a three-layered porous substrate. After comprehensive performance of the different layers of the separator, the thermal stability and safety performance of the lithium ion battery (for example, heavy impact resistance) can be effectively improved by adopting the separator composed of the three-layered porous substrate.

The present application provides a separator comprising a first porous substrate, a second porous substrate and a third porous substrate, wherein the second porous substrate is arranged between the first porous substrate and the third porous substrate, and the tensile strength of the separator in the machine direction is greater than the tensile strength of the separator in the transverse direction, wherein the tensile strength is determined as follows: first, the separator is cut into a sample having a width of 14.5 mm and a length of 100 mm in the machine direction and the transverse direction, respectively, then the separator sample is stretched at a constant rate of 50 mm/min and a clamping distance of 40 mm using a high-speed tensile machine, and the tensile strengths of the separator in the machine and transverse fractures are recorded separately.

In the above separator, the tensile strength of the separator in the machine direction is 9806.65 Pa ∼ 29419.95 Pa (1000 kgf/m²∼3000 kgf/m²).

In the above separator, the tensile strength of the separator in the transverse direction is 196.133 Pa ∼ 3922.66 Pa (20 kgf/m²∼400 kgf/m²).

In the above separator, the first porous substrate may have a melting point of 150 °C to 350 °C, the second porous substrate may have a melting point of 110 °C to 150 °C, and the third porous substrate may have a melting point of 150 °C to 350 °C.

In the above separator, the separator may have a porosity of 25% to 70%.

In the above separator, the second porous substrate comprises at least one of polyethylene and atactic polypropylene, and the first porous substrate and the third porous substrate respectively and individually comprise one or more of isotactic polypropylene, polyvinylidene fluoride, polyethylene terephthalate, cellulose, polyimide, polyamide, spandex, and polyphthalaldehyde phenyl diamine.

In the above separator, the separator may further comprises a porous layer arranged on at least one surface of the separator.

In the above separator, he porous layer may comprise a binder and an inorganic particle, thebinder is selected from one or more of vinylidene fluoride-hexafluoropropylene copolymer, vinylidene fluoride-trichloroethylene copolymer, polymethyl methacrylate, polyacrylic acid, polyacrylate, polyacrylonitrile, polyvinylpyrrolidone, polyvinyl acetate, ethylene-vinyl acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, sodium carboxymethyl cellulose, lithium carboxymethyl cellulose, acrylonitrile-styrene-butadiene copolymer, polyvinyl alcohol, polyvinyl ether, polytetrafluoroethylene, polyhexafluoropropylene, styrene-butadiene copolymer and polyvinylidene fluoride.

In the above separator, the inorganic particle may be selected from one or more of alumina (Al₂O₃), silica (SiO₂), magnesium oxide (MgO), titanium oxide (TiO₂), hafnium oxide (HfO₂), tin oxide (SnO₂), cerium oxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide and barium sulfate.

The present application also provides a lithium ion battery comprising the above separator

In the above lithium ion battery, the separator further comprises a porous layer arranged on at least one surface of the separator.

In the above lithium ion battery, the porous layer comprises a binder and an inorganic particle, the binder is selected from one or more of vinylidene fluoride-hexafluoropropylene copolymer, vinylidene fluoride-trichloroethylene copolymer, polymethyl methacrylate, polyacrylic acid, polyacrylate, polyacrylonitrile, polyvinylpyrrolidone, polyvinyl acetate, ethylene-vinylidene acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, sodium carboxymethyl cellulose, lithium carboxymethyl cellulose, acrylonitrile-styrene-butadiene copolymer, polyvinyl alcohol, polyvinyl ether, polytetrafluoroethylene, polyhexafluoropropylene, styrene-butadiene copolymer and polyvinylidene fluoride.

In the above lithium ion battery, the inorganic particle is selected from one or more of alumina, silica, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide,

The present application improves the thermal stability and safety performance (e.g. heavy impact resistance)of a lithium ion battery comprising the separator by adopting the separator composed of a three-layered porous substrate (the tensile strength of the separator in the machine direction is greater than the tensile strength of the separator in the transverse direction). Further, providing a porous layer on the surface of the separator can be used to further improve the thermal stability and safety performance of the lithium ion battery.

### BRIEF DESCRIPTION OF THE ACCOMPANYING DRAWINGS

Fig. 1 represents a schematic diagram of a separator composed of three-layered porous substrate.
Fig. 2 represents a schematic diagram of an electrode assembly of a wound structure.
Fig. 3 represents a schematic diagram of an electrode assembly of a stacked structure.
Fig. 4 represents a schematic diagram of a separator composed of three-layered porous substrate having a porous layer.

### DETAILED DESCRIPTION OF THE PREFERRED EXAMPLES

The exemplary embodiments are described in sufficient detail below, but these exemplary embodiments may be implemented in various ways and should not be construed as being limited to the embodiments set forth herein. Rather, these embodiments are provided so that the present application will be thorough and complete and the scope of the present application is fully conveyed to those skilled in the art.

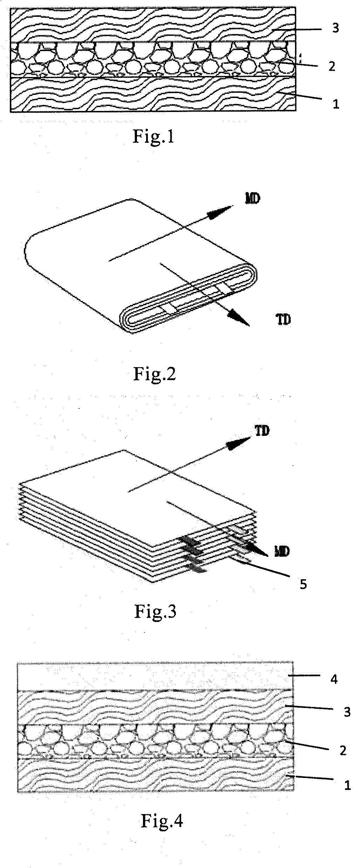

To improve the thermal stability and safety performance (e.g. heavy impact resistance) of the lithium ion battery, the present application provides a mutli-layered composite separator such as three-layered composite separator. As shown in Fig. 1, the separator of the present application comprises a first porous substrate 1, a second porous substrate 2 and a third porous substrate 3, wherein the second porous substrate 2 is arranged between the first porous substrate 1 and the third porous substrate 3.

The first porous substrate and the third porous substrate respectively and individually comprise one or more of isotactic polypropylene, polyvinylidene fluoride, polyethylene terephthalate (PET), cellulose, polyimide (PI), polyamide (PA), spandex, and polyphthalamide. In some embodiments, the first porous substrate has a melting point of 150 °C to 350 °C and the third porous substrate has a melting point of 150 °C to 350 °C. The second porous substrate comprises one or more of polyethylene and atactic polypropylene. In some embodiments, the second porous substrate has a melting point of 110°C to 150 °C.

In some embodiments, the melting points of the first and third porous substrates are higher than the melting point of the second porous substrate. When heat is generated in the lithium ion battery due to abuse, the temperature inside the lithium ion battery rises to be higher than the melting point of the second porous substrate of the separator, then the holes in the second porous substrate to be closed or the second porous substrate melts to block microporesin the first and third porous substrates of the separator so as to reduce drastically the porosity of the entire separator so that the lithium ions cannot flow between the positive and negative electrodes, thereby cutting off the current, reducing the heat generation, and avoiding the lithium ion battery to ignite or explode by preventing the temperature from rising and therefore improving the safety performance of the lithium ion battery. And since the first and third porous substrates have a high heat-resistant temperature, the shrinkage of the separator can be prevented from causing the positive electrode and the negative electrode to contact and short-circuit.

In some embodiments, the separator of the present application has a porosity of 25% to 70%.

The tensile strength of the separator of the present application in the machine direction is greater than the tensile strength of the separator in the transverse direction. More particular, the tensile strength of the separator in the machine direction is 9806.65 Pa ∼ 29419.95 Pa (1000 kgf/m²∼3000 kgf/m²). The tensile strength of the separator in the transverse direction is 196.133 Pa ∼ 3922.66 Pa (20 kgf/m²∼400 kgf/m²). In some embodiments, the electrode assembly of the lithium ion battery is of wound structure shown in Fig. 2; the machine direction refers to the wound direction of the electrode assembly and the transverse direction refers to the direction perpendicular to the machine direction. In some embodiments, the electrode assembly of the lithium ion battery is of stacked or folded structure shown in Fig. 3; the machine direction refers to the direction in which an electrode tab 5 is drawn and the transverse direction refers to the direction perpendicular to the machine direction.

In some embodiments, the tensile strength of the separator is related to the safety performance of the lithium ion battery, and the tensile strength of the separator in the machine direction is greater than the tensile strength of the separator in the transverse direction. When the lithium ion battery is impact by heavy objects, the lower the tensile strength of the separator in the transverse direction, the easier it is to break. while the better the uniformity of the fracture of the lithium ion battery, the less the burr of the fracture, so that the direct contact of the electrodes in the battery are prevented to cause the battery to ignite, thereby improving the safety performance of the lithium ion battery.

In some embodiments, the separator of the present application further comprises a porous layer arranged on at least one surface of the separator. With reference to Fig. 4, Fig. 4 shows a schematic diagram of a composite multi-layered separator containing a porous layer 4. Of course, the structure of the separator shown in Fig. 4 is merely exemplary, and the porous layer 4 may be arranged on the surface of the separator adjacent to the first porous substrate 1, or the porous layer 4 may be provided on the surface of the separator adjacent to the first porous substrate 1 and the third porous substrate 3.

In some embodiments, the porous layer 4 comprises a binder and an inorganic particle. The binder is selected from one or more of vinylidene fluoride-hexafluoropropylene copolymer, vinylidene fluoride-trichloroethylene copolymer, polymethyl methacrylate, polyacrylic acid, polyacrylate, polyacrylonitrile, polyvinylpyrrolidone, polyvinyl acetate, ethylene-vinylidene acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, sodium carboxymethyl cellulose, lithium carboxymethyl cellulose, acrylonitrile-styrene-butadiene copolymer, polyvinyl alcohol, polyvinyl ether, polytetrafluoroethylene, polyhexafluoropropylene, styrene-butadiene copolymer and polyvinylidene fluoride. The binder may provide a sufficient bonding interface to the electrodes, ensuring high adhesion of the separator to the electrodes for allowing the lithium ion battery to have a higher safety performance.

The inorganic particle is selected from one or more of alumina (Al₂O₃), silica (SiO₂), magnesium oxide (MgO), titanium oxide (TiO₂), hafnium oxide (HfO₂), tin oxide (SnO₂), cerium oxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide and barium sulfate. The inorganic particle may play a good mechanical support role for the porous layer so as to prevent the porous layer from undergoing compression collapse during the processing of the lithium ion battery, and the presence of the inorganic particle may improve the heat shrinkage performance of the separator.

When the lithium ion battery is impact by a heavy object, the porous layer can slide relative to the surface of the separator for reducing the risk of the separator being broken, at the same time, the presence of inorganic particle in the porous layer increases the mechanical strength of the separator for improving the anti-impact safety performance of the separator and improving the safety performance of the lithium ion battery. The lithium ion battery further comprises a positive electrode, a negative electrode and an electrolyte, wherein the separator of the present application is inserted between the positive electrode and the negative electrode. The positive current collector may be an aluminum foil or a nickel foil, and the negative current collector may be a copper foil or a nickel foil.

In the above lithium ion battery, the positive electrode comprises a positive electrode material (hereinafter, sometimes referred to as "positive electrode material capable of intercalating and deintercalating lithium Li") capable of intercalating and deintercalating lithium (Li). Examples of the positive electrode material capable of intercalating and deintercalating lithium Li may comprise one or more of lithium cobaltate, lithium nickel cobalt manganese oxide, lithium nickel cobalt aluminate oxide, lithium manganese oxide, lithium ferromanganese phosphate, lithium vanadium phosphate, lithium vanadium phosphate oxide, lithium iron phosphate, lithium titanate, and lithium-rich manganese-based materials.

In the above positive electrode material, the chemical formula of lithium cobaltate may be LiₓCoₐMl_{b}O_{2-c}, wherein Ml represents at least one selected from the group consisting of nickel (Ni), manganese (Mn), magnesium (Mg), aluminum (Al), boron (B), titanium (Ti), vanadium (V), chromium (Cr), iron (Fe), copper. (Cu), zinc (Zn), molybdenum (Mo), tin (Sn), calcium (Ca), strontium (Sr), tungsten (W), yttrium (Y), lanthanum (La), zirconium (Zr), and silicon, and the values of x, a, b and c are respectively in the following ranges: 0.8 ≤ x ≤ 1.2, 0.8 ≤ a ≤ 1, 0 ≤ b ≤ 0.2, -0.1 ≤ c ≤ 0.2;

In the above positive electrode material, the chemical formula of lithium nickel cobalt manganese oxide or lithium nickel cobalt aluminate oxide may be Li_{y}Ni_{d}M2ₑO_{2-f}, wherein M2 represents at least one selected from the group consisting of cobalt (Co), manganese (Mn), magnesium (Mg), aluminum (Al), boron (B), titanium (Ti), vanadium (V), chromium (Cr), iron (Fe), copper(Cu), zinc (Zn), molybdenum (Mo), tin (Sn), calcium (Ca), strontium (Sr), tungsten (W), zirconium (Zr) and silicon (Si), and the values of y, d, e and f are respectively in the following ranges: 0.8 ≤ y ≤ 1.2, 0.3 ≤ d ≤ 0.98, 0.02 ≤ e ≤ 0.7, -0.1 ≤ f ≤ 0.2;

In the above positive electrode material, the chemical formula of lithium manganese oxide may be Li_{z}Mn_{2-g}M_{3g}O₄₋ₕ, wherein M3 represents at least one selected from the group consisting of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr) and tungsten (W), and the values of z, g, and h are respectively in the following ranges: 0.8 ≤ z ≤ 1.2, 0 ≤ g ≤ 1.0 and -0.2 ≤ h ≤ 0.2.

The negative electrode comprises a negative electrode material (hereinafter, sometimes referred to as "negative electrode material capable of intercalating/deintercalating lithium Li") capable of intercalating and deintercalating lithium (Li). Examples of the negative electrode material capable of intercalating and deintercalating lithium Li may comprise carbon materials, metal compounds, oxides, sulfides, nitrides of lithium such as LiN₃, lithium metal, metals which form alloys together with lithium and polymer materials.

Examples of carbon materials may comprise low graphitized carbon, easily graphitizable carbon, artificial graphite, natural graphite, mesocarbon microbeads, soft carbon, hard carbon, pyrolytic carbon, coke, vitreous carbon, organic polymer compound sintered body, carbon fiber and activated carbon. Among them, coke may comprise pitch coke, needle coke, and petroleum coke. The organic polymer compound sintered body refers to a material obtained by calcining a polymer material such as a phenol plastic or a furan resin at a suitable temperature for carbonizing, and some of these materials are classified into low graphitized carbon or easily graphitizable carbon. Examples of the polymer material may comprise polyacetylene and polypyrrole.

Further, in the negative electrode material capable of intercalating and deintercalatinglithium(Li), a material whose charging and discharging voltages are close to the charging and discharging voltages of lithium metal is selected. This is because the lower the charging and discharging voltage of the negative electrode material, the easier the battery is to have a higher energy density. Among them, the negative electrode material may be selected from carbon materials because their crystal structures are only slightly changed upon charging and discharging, and therefore, good cycle characteristics as well as large charge and discharge capacities may be obtained. In particular, graphite may be selected because it gives a large electrochemical equivalent and a high energy density.

In addition, the negative electrode material capable of intercalating and deintercalating lithium (Li) may comprise elemental lithium metal, metal elements and semimetal elements capable of forming an alloy together with lithium (Li), and alloys and compounds of such elements. In particular, they are used together with carbon materials because in this case, good cycle characteristics as well as high energy density may be obtained. In addition to alloys comprising two or more metal elements, the alloys used herein also comprise alloys comprising one or more metal elements and one or more semi-metal elements. The alloy may be in the form of a solid solution, a eutectic crystal (eutectic mixture), an intermetallic compound, and a mixture thereof.

Examples of the metal element and the semi-metal element may comprise tin (Sn), plumbum (Pb), aluminum (Al), indium (In), silicon (Si), zinc (Zn), antimony (Sb), bismuth (Bi), Cadmium (Cd), magnesium (Mg), boron (B), gallium (Ga), germanium (Ge), arsenic (As), silver (Ag), zirconium (Zr), yttrium (Y), and hafnium (Hf). Examples of the above alloys and compounds may comprise a material having a chemical formula MaₛMbₜLiᵤ and a material having a chemical formula MaₚMc_{q}Mdᵣ. In these chemical formulae, Ma denotes at least one of a metal element and a semi-metal element capable of forming an alloy together with lithium; Mb denotes at least one of a metal element and a semi-metal element other than lithium and Ma; Mc denotes at least oneof the non-metallic elements; Md denotes at least one of a metal element and a semi-metal element other than Ma; and s, t, u, p, q and r meet s>0, t≥0, u≥0, p>0, q>0 and r≥0.

Further, an inorganic compound not comprising lithium (Li) such as MnO₂. V₂O₅, V₆O₁₃, NiS, and MoS may be used in the negative electrode.

The above lithium ion battery further comprises an electrolyte which may be one or more of a gel electrolyte, a solid electrolyte and an electrolytic solution, and the electrolytic solution comprises a lithium salt and a non-aqueous solvent.

The lithium salt comprises one or more selected from the group consisting of LiPF₆, LiBF₄, LiAsF₆, LiClO₄, LiB(C₆H₅)₄, LiCH₃SO₃, LiCF₃SO₃, LiN(SO₂CF₃)₂. LiC(SO₂CF₃)₃, LiSiF₆, LiBOB, and lithium difluoroborate. For example, the lithium salt selects LiPF₆ because it may give high ionic conductivity and improved cycle characteristics.

The non-aqueous solvent may be a carbonate compound, a carboxylate compound, an ether compound, other organic solvents, or a combination thereof.

The carbonate compound may be a chain carbonate compound, a cyclic carbonate compound, a fluorocarbonate compound, or a combination thereof.

Examples of the chain carbonate compound are diethyl carbonate (DEC), dimethyl carbonate (DMC), dipropyl carbonate (DPC), methylpropyl carbonate (MPC), ethylene propyl carbonate (EPC), and methyl ethyl carbonate (MEC) and combinations thereof. Examples of the cyclic carbonate compound are ethylene carbonate (EC), propylene carbonate (PC), butylene carbonate (BC), vinylidene ethylene carbonate (VEC), and combinations thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, and combinations thereof.

Examples of the carboxylate compound are methyl acetate, ethyl acetate, n-propyl acetate, t-butyl acetate, methyl propionate, ethyl propionate, γ-butyrolactone, azlactone, valerolactone, mevalonolactone, caprolactone, methyl formate and combinations thereof.

Examples of the ether compounds are dibutyl ether, tetraglyme, diglyme, 1,2-dimethoxyethane, 1,2-diethoxyethane, ethoxymethoxyethane, 2-methyltetrahydrofuran, tetrahydrofuran, and combinations thereof.

Examples of other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate and phosphate, and combinations thereof.

The positive electrode, the separator, the negative electrode are sequentially wound or folded into an electrode assembly, and then sealed (for example, in an aluminum plastic film) for encapsulation, and injected with an electrolyte for formation and packaging, thus a lithium ion battery is made.

Those skilled in the art will appreciate that the above described methods for preparing the lithium ion battery are merely examples. Other methods commonly used in the art may be employed without departing from the disclosure of the present application.

The following description is made in conjunction with specific examples to better understand the present application.

### Example 1

### (1) Preparation of the negative electrode

A solvent of deionized water and a thickener of sodium carboxymethyl cellulose (CMC) are added to a stirring mill to dissolve completely under vacuum to obtain an aqueous polymer solution; then, a conductive agent of conductive carbon black is added to the aqueous polymer solution, and stirred to be uniform; then a negative electrode material of artificial graphite is added and stirred slowly under vacuum to be uniform; then, a binder of styrene-butadiene rubber is added, and is slowly stirred under vacuum to be uniform to obtain a negative electrode slurry; subsequently, the negative electrode slurry is uniformly coated on both sides of a negative electrode current collector of copper foil, and after drying, a negative electrode material layer is obtained, and then compacted by a roll press, and finally cut and welded with an electrode tab, so as to obtain the negative electrode of the lithium ion battery. Among them, the mass ratio of the negative electrode material, the conductive agent, the binder, and the thickener is 94.5:1.5:2:2.

### (2) Preparation of the positive electrode

A solvent of N-methylpyrrolidone (NMP) and a binder of polyvinylidene fluoride (PVDF) are added to a stirring mill to dissolve completely under vacuum to obtain a polyvinylidene fluoride solution; then, a conductive agent of conductive carbon black is added to the polyvinylidene fluoride solution, and stirred rapidly to be uniform; then a positive electrode material of lithium cobaltate (LiCoO₂) is added and stirred slowly under vacuum to be uniform to obtain a positive electrode slurry; subsequently, the positive electrode slurry is uniformly coated on both sides of a positive electrode current collector of aluminum foil, and compacted by a roll press, and finally cut and welded with an electrode tab, so as to obtain the positive electrode of the lithium ion battery. Among them, the mass ratio of the positive electrode material, the binder and the conductive agent is 92:4:4.

### (3) Preparation of electrolyte

In an argon atmosphere glove box with a water content of <10 ppm, ethylene carbonate (EC), propylene carbonate (PC), and dimethyl carbonate (DEC) are mixed in a volume ratio of EC:PC:DEC=1:1:1, followed by dissolving the fully dried lithium salt LiPF₆ in a mixed organic solvent and uniformly mixing to obtain a liquid electrolyte (electrolytic solution), wherein the concentration of LiPF₆ is 1M.

### (4) Preparation of separator

A first porous substrate (isotactic polypropylene PP having a melting point of 163 °C to 167 °C, a tensile strength in machine direction of 101008495 Pa (1030 kgf/cm²), a tensile strength in transverse direction of 78649333 Pa (802 kgf/cm²)), a second porous substrate (polyethylene PE having a melting point of 118 °C to 122 °C, a tensile strength in machine direction of 79433865 Pa (810 kgf/cm²) and a tensile strength in transverse direction of 69333015.5 Pa (707 kgf/cm²)) and a third porous substrate (isotactic polypropylene PP with a melting point of 163 °C to 167 °C, a tensile strength in machine direction of 101008495 Pa (1030 kgf/cm²) and a tensile strength in transverse direction of 78649333 Pa (802 kgf/cm²)) are provided. The second porous substrate is arranged between the first and third porous substrates, and is hot-pressed together to obtain a separator, wherein the hot pressing temperature is controlled at 90 °C, and the hot pressing pressure is controlled at 1.0 MPa. Among them, the separator has a tensile strength in the machine direction of 87279185 Pa (890 kgf/cm²), a tensile strength in the transverse direction of 71588545 Pa (730 kgf/cm²), and a porosity of 30%.

### (5) Preparation of lithium ion battery

The positive electrode, the separator and the negative electrode are stacked in order so that the separator is in a role of isolation between the positive electrode and the negative electrode, and then are wound to obtain an electrode assembly; the electrode assembly is placed in a packaging shell with aluminum plastic film, and the prepared electrolyte is injected into the dried electrode assembly, and then subjected to processes such as vacuum encapsulation, static crystallization, formation, capacity testing, shaping to obtain a lithium ion battery.

### Example 2

The preparation process of the lithium ion battery is the same as that in Example 1, except that:

### (4) Preparation of separator

The first porous substrate has a tensile strength in machine direction of 81297128.5 Pa (829 kgf/cm²), a tensile strength in transverse direction of 68646550 Pa (700 kgf/cm²), and the second porous substrate has a tensile strength of 78453200 Pa (800 kgf/cm²) and a tensile strength in transverse direction of 61487695.5 Pa (627 kgf/cm²); the third porous substrate is polyvinylidene fluoride PVDF having a melting point of 170 °C to 172 °C, a tensile strength in machine direction of 59820565 Pa (610 kgf/cm²) and a tensile strength in transverse direction of 53936575 Pa (550 kgf/cm²); the tensile strength of the separator in the machine direction is 75805404.5 Pa (773 kgf/cm²), and the tensile strength of the separator in the transverse direction is 61193496 Pa (624 kgf/cm²).

### Example 3

The preparation process of the lithium ion battery is the same as that in Example 1, except that:

### (4) Preparation of separator

The first porous substrate is polyvinylidene fluoride PVDF having a melting point of 169 °C to 172 °C, a tensile strength in machine direction of 59820565 Pa (610 kgf/cm²), a tensile strength in transverse direction of 39226600 Pa (400 kgf/cm²), and the second porous substrate has a tensile strength n machine direction of 45797055.5 Pa (467 kgf/cm²) and a tensile strength in transverse direction of 61487695.5 Pa (627 kgf/cm²); the third porous substrate is polyvinylidene fluoride PVDF having a melting point of 169°C to 172 °C, a tensile strength in machine direction of 59820565 Pa (610 kgf/cm²) and a tensile strength in transverse direction of 39226600 Pa (400 kgf/cm²); the tensile strength of the separator in the machine direction is 53446242.5 Pa (545 kgf/cm²), and the tensile strength of the separator in the transverse direction is 47366119.5 Pa (483 kgf/cm²).

### Example 4

The preparation process of the lithium ion battery is the same as that in Example 1, except that:

### (4) Preparation of separator

The first porous substrate has a tensile strength in machine direction of 92378643 Pa (942 kgf/cm²), a tensile strength in transverse direction of 68646550 Pa (700 kgf/cm²), and the second porous substrate is atactic polypropylene PP having a melting point of 112°C to 114°C, a tensile strength in machine direction of 80414530 Pa (820 kgf/cm²) and a tensile strength in transverse direction of 61781895 Pa (630 kgf/cm²); the third porous substrate has a tensile strength in machine direction of 92378643 Pa (942 kgf/cm²) and a tensile strength in transverse direction of 68646550 Pa (700 kgf/cm²); the tensile strength of the separator in the machine direction is 90515379.5 Pa (923 kgf/cm²), and the tensile strength of the separator in the transverse direction is 67077486 (684 kgf/cm²).

### Example 5

The preparation process of the lithium ion battery is the same as that in Example 1, except that:

### (4) Preparation of separator

The first porous substrate is polyamide PA having a melting point of 230 °C to 234 °C, a tensile strength in machine direction of 36284605 Pa (370 kgf/cm²), a tensile strength in transverse direction of 40305331.5 Pa (411 kgf/cm²), and the second porous substrate is atactic polypropylene PP having a melting point of 110°C to 113°C, a tensile strength in machine direction of 60801230 Pa (620 kgf/cm²) and a tensile strength in transverse direction of 51975245 Pa (530 kgf/cm²); the third porous substrate is polyimide PI having a melting point of 318 °C to 320 °C, a tensile strength in machine direction of 39226600 Pa (400 kgf/cm²) and a tensile strength in transverse direction of 37265270 Pa (380 kgf/cm²); the tensile strength of the separator in the machine direction is 46581587.5 Pa (475 kgf/cm²), and the tensile strength of the separator in the transverse direction is 43737659 Pa (446 kgf/cm²).

### Example 6

The preparation process of the lithium ion battery is the same as that in Example 1, except that:

### (4) Preparation of separator

The first porous substrate has a tensile strength in machine direction of 117679800 Pa (1200 kgf/cm²), a tensile strength in transverse direction of 78453200 Pa (800 kgf/cm²), and the second porous substrate has a tensile strength in machine direction of 78453200 Pa (800 kgf/cm²) and a tensile strength in transverse direction of 61487695.5 Pa (627 kgf/cm²); the third porous substrate has a tensile strength in machine direction of 117679800 Pa (1200 kgf/cm²) and a tensile strength in transverse direction of 78453200 Pa (800 kgf/cm²); the tensile strength of the separator in the machine direction is 98066500 Pa (1000 kgf/cm²), the tensile strength of the separator in the transverse direction is 70705946.5 Pa (721 kgf/cm²), and the porosity of the separator is 35%.

### Example 7

The preparation process of the lithium ion battery is the same as that in Example 1, except that:

### (4) Preparation of separator

The first porous substrate has a tensile strength in machine direction of 208881645 Pa (2130 kgf/cm²), a tensile strength in transverse direction of 65704555 Pa (670 kgf/cm²), and the second porous substrate has a tensile strength in machine direction of 178481030 Pa (1820 kgf/cm²) and a tensile strength in transverse direction of 54623040.5 Pa (557 kgf/cm²); the third porous substrate has a tensile strength in machine direction of 208881645 Pa (2130 kgf/cm²) and a tensile strength in transverse direction of 65704555 Pa (670 kgf/cm²); the tensile strength of the separator in the machine direction is 187503148 Pa (1912 kgf/cm²), the tensile strength of the separator in the transverse direction is 61585762 Pa (628 kgf/cm²), and the porosity of the separator is 35%.

### Example 8

The preparation process of the lithium ion battery is the same as that in Example 1, except that:

### (4) Preparation of separator

The first porous substrate has a tensile strength in machine direction of 177500365 Pa (1810 kgf/cm²), a tensile strength in transverse direction of 138469898 Pa (1412 kgf/cm²), and the second porous substrate has a tensile strength in machine direction of 162986523 Pa (1662 kgf/cm²) and a tensile strength in transverse direction of 107873150 Pa (1100 kgf/cm²); the third porous substrate has a tensile strength in machine direction of 177500365 Pa (1810 kgf/cm²) and a tensile strength in transverse direction of 138469898 Pa (1412 kgf/cm²); the tensile strength of the separator in the machine direction is 166968022.9 Pa (1702.6 kgf/cm²), the tensile strength of the separator in the transverse direction is 127123603.95 Pa (1296.3 kgf/cm²), and the porosity of the separator is 35%.

### Example 9

The preparation process of the lithium ion battery is the same as that in Example 1, except that:

### (4) Preparation of separator

The first porous substrate has a tensile strength in machine direction of 77472535 Pa (790 kgf/cm²), a tensile strength in transverse direction of 22555295 Pa (230 kgf/cm²), and the second porous substrate has a tensile strength in machine direction of 74628606.5 Pa (761 kgf/cm²) and a tensile strength in transverse direction of 10002783 Pa (102 kgf/cm²); the third porous substrate has a tensile strength in machine direction of 77472535 Pa (790 kgf/cm²) and a tensile strength in transverse direction of 22555295 Pa (230 kgf/cm²); the tensile strength of the separator in the machine direction is 76491870 Pa (780 kgf/cm²), the tensile strength of the separator in the transverse direction is 17848103 Pa (182 kgf/cm²), and the porosity of the separator is 40%.

### Example 10

The preparation process of the lithium ion battery is the same as that in Example 1, except that:

### (4) Preparation of separator

The first porous substrate has a tensile strength in machine direction of 58055368 Pa (592 kgf/cm²), a tensile strength in transverse direction of 34323275 Pa (350 kgf/cm²), and the second porous substrate has a tensile strength in machine direction of 50406181 Pa (514 kgf/cm²) and a tensile strength in transverse direction of 29518016.5 Pa (301 kgf/cm²); the third porous substrate has a tensile strength in machine direction of 58055368 Pa (592 kgf/cm²) and a tensile strength in transverse direction of 34323275 Pa (350 kgf/cm²); the tensile strength of the separator in the machine direction is 54917240 Pa (560 kgf/cm²), the tensile strength of the separator in the transverse direction is 31391086.65 Pa (320.1 kgf/cm²), and the porosity of the separator is 40%.

### Example 11

The preparation process of the lithium ion battery is the same as that in Example 1, except that:

### (4) Preparation of separator

The first porous substrate has a tensile strength in machine direction of 69921414.5 Pa (713 kgf/cm²), a tensile strength in transverse direction of 43149260 Pa (440 kgf/cm²), and the second porous substrate has a tensile strength in machine direction of 58937966.5 Pa (601 kgf/cm²) and a tensile strength in transverse direction of 34421341.5 Pa (351 kgf/cm²); the third porous substrate has a tensile strength in machine direction of 69921414.5 Pa (713 kgf/cm²) and a tensile strength in transverse direction of 43149260 Pa (440 kgf/cm²); the tensile strength of the separator in the machine direction is 66685220 Pa (680 kgf/cm²), the tensile strength of the separator in the transverse direction is 39226600 Pa (400 kgf/cm²), and the porosity of the separator is 40%.

### Example 12

The preparation process of the lithium ion battery is the same as that in Example 1, except that:

### (4) Preparation of separator

The first porous substrate has a tensile strength in machine direction of 46091255 Pa (470 kgf/cm²), a tensile strength in transverse direction of 5393657.5 Pa (55 kgf/cm²), and the second porous substrate has a tensile strength in machine direction of 36578804.5 Pa (373 kgf/cm²) and a tensile strength in transverse direction of 20593965 Pa (210 kgf/cm²); the third porous substrate has a tensile strength in machine direction of 46091255 Pa (470 kgf/cm²) and a tensile strength in transverse direction of 5393657.5 Pa (55 kgf/cm²); the tensile strength of the separator in the machine direction is 40501464.5 Pa (413 kgf/cm²), the tensile strength of the separator in the transverse direction is 9581097.05 Pa (97.7 kgf/cm²), and the porosity of the separator is 40%.

### Example 13

The preparation process of the lithium ion battery is the same as that in Example 1, except that:

### (4) Preparation of separator

The first porous substrate has a tensile strength in machine direction of 159848395 Pa (1630 kgf/cm²), a tensile strength in transverse direction of 20790098 Pa (212 kgf/cm²), and the second porous substrate has a tensile strength in machine direction of 114737805 Pa (1170 kgf/cm²) and a tensile strength in transverse direction of 10100849.5 Pa (103 kgf/cm²); the third porous substrate has a tensile strength in machine direction of 159848395 Pa (1630 kgf/cm²) and a tensile strength in transverse direction of 20790098 Pa (212 kgf/cm²); the tensile strength of the separator in the machine direction is 145128613.35 Pa (1479.9 kgf/cm²), the tensile strength of the separator in the transverse direction is 17848103 Pa (182 kgf/cm²), and the porosity of the separator is 35%.

### Example 14

The preparation process of the lithium ion battery is the same as that in Example 1, except that:

### (4) Preparation of separator

The first porous substrate has a tensile strength in machine direction of 147197816.5 Pa (1501 kgf/cm²), a tensile strength in transverse direction of 38245935 Pa (390 kgf/cm²), and the second porous substrate has a tensile strength in machine direction of 128172915.5 Pa (1307 kgf/cm²) and a tensile strength in transverse direction of 27458620 Pa (280 kgf/cm²); the third porous substrate has a tensile strength in machine direction of 147197816.5 Pa (1501 kgf/cm²) and a tensile strength in transverse direction of 38245935 Pa (390 kgf/cm²); the tensile strength of the separator in the machine direction is 142490624.5 Pa (1453 kgf/cm²), the tensile strength of the separator in the transverse direction is 33931009 Pa (346 kgf/cm²), and the porosity of the separator is 35%.

### Example 15

The preparation process of the lithium ion battery is the same as that in Example 1, except that:

### (4) Preparation of separator

The first porous substrate has a tensile strength in machine direction of 138273765 Pa (1410 kgf/cm²), a tensile strength in transverse direction of 19024901 Pa (194 kgf/cm²), and the second porous substrate has a tensile strength in machine direction of 104931155 Pa (1070 kgf/cm²) and a tensile strength in transverse direction of 24222425.5 Pa (247 kgf/cm²); the third porous substrate has a tensile strength in machine direction of 138273765 Pa (1410 kgf/cm²) and a tensile strength in transverse direction of 19024901 Pa (194 kgf/cm²); the tensile strength of the separator in the machine direction is 127123603.95 Pa (1296.3 kgf/cm²), the tensile strength of the separator in the transverse direction is 19907499.5 Pa (203 kgf/cm²), and the porosity of the separator is 35%.

### Example 16

The preparation process of the lithium ion battery is the same as that in Example 1, except that:

### (4) Preparation of separator

The first porous substrate has a tensile strength in machine direction of 180638493 Pa (1842 kgf/cm²), a tensile strength in transverse direction of 2353596 Pa (24 kgf/cm²), and the second porous substrate has a tensile strength in machine direction of 193289071.5 Pa (1971 kgf/cm²) and a tensile strength in transverse direction of 1569064 Pa (16 kgf/cm²); the third porous substrate has a tensile strength in machine direction of 180638493 Pa (1842 kgf/cm²) and a tensile strength in transverse direction of 2353596 Pa (24 kgf/cm²); the tensile strength of the separator in the machine direction is 186130217 Pa (1898 kgf/cm²), the tensile strength of the separator in the transverse direction is 2059396.5 Pa (21 kgf/cm²), and the porosity of the separator is 35%.

### Example 17

The preparation process of the lithium ion battery is the same as that in Example 1, except that:

### (4) Preparation of separator

The first porous substrate has a tensile strength in machine direction of 267525412 Pa (2728 kgf/cm²), a tensile strength in transverse direction of 11081514.5 Pa (113 kgf/cm²), and the second porous substrate has a tensile strength in machine direction of 294885965.5 Pa (3007 kgf/cm²) and a tensile strength in transverse direction of 8237586 Pa (84 kgf/cm²); the third porous substrate has a tensile strength in machine direction of 267525412 Pa (2728 kgf/cm²) and a tensile strength in transverse direction of 11081514.5 Pa (113 kgf/cm²); the tensile strength of the separator in the machine direction is 277332062 Pa (2828 kgf/cm²), the tensile strength of the separator in the transverse direction is 9581097.05 Pa (97.7 kgf/cm²), and the porosity of the separator is 35%.

### Example 18

The preparation process of the lithium ion battery is the same as that in Example 1, except that:

### (4) Preparation of separator

The first porous substrate has a tensile strength in machine direction of 120621795 Pa (1230 kgf/cm²), a tensile strength in transverse direction of 42756994 Pa (436 kgf/cm²), and the second porous substrate has a tensile strength in machine direction of 88259850 Pa (900 kgf/cm²) and a tensile strength in transverse direction of 29714149.5 Pa (303 kgf/cm²); the third porous substrate has a tensile strength in machine direction of 120621795 Pa (1230 kgf/cm²) and a tensile strength in transverse direction of 42756994 Pa (436 kgf/cm²); the tensile strength of the separator in the machine direction is 105519554 Pa (1076 kgf/cm²), the tensile strength of the separator in the transverse direction is 37951735.5 Pa (387 kgf/cm²), and the porosity of the separator is 35%.

### Example 19

The preparation process of the lithium ion battery is the same as that in Example 18, except that:

### (4) Preparation of separator

A porous layer is also formed on one surface of the separator, and the porous layer comprises polyacrylonitrile and aluminum oxide.

### Example 20

The preparation process of the lithium ion battery is the same as that in Example 13, except that:

### (4) Preparation of separator

A porous layer is also formed on both surfaces of the separator, and the porous layer comprises polyacrylonitrile and aluminum oxide.

### Example 21

The preparation process of the lithium ion battery is the same as that in Example 14, except that:

### (4) Preparation of separator

A porous layer is also formed on both surfaces of the separator, and the porous layer comprises polytetrafluoroethylene and silica.

### Example 22

The preparation process of the lithium ion battery is the same as that in Example 15, except that:

### (4) Preparation of separator

A porous layer is also formed on both surfaces of the separator, and the porous layer comprises polytetrafluoroethylene, polyacrylonitrile, and silica.

### Example 23

The preparation process of the lithium ion battery is the same as that in Example 17, except that:
(4) For preparation of separator, a porous layer is also formed on both surfaces of the separator, and the porous layer comprises polytetrafluoroethylene, silica, and alumina.

### Comparative Example 1

The preparation process of the lithium ion battery is the same as that in Example 1, except that:

### (4) Preparation of separator

The first porous substrate has a tensile strength in machine direction of 137293100 Pa (1400 kgf/cm²), a tensile strength in transverse direction of 137293100 Pa (1400 kgf/cm²), and the second porous substrate has a tensile strength in machine direction of 98752965.5 Pa (1007 kgf/cm²) and a tensile strength in transverse direction of 98752965.5 Pa (1007 kgf/cm²); the third porous substrate has a tensile strength in machine direction of 137293100 Pa (1400 kgf/cm²) and a tensile strength in transverse direction of 98752965.5 Pa (1007 kgf/cm²); the tensile strength of the separator in the machine direction is 120033396 Pa (1224 kgf/cm²), the tensile strength of the separator in transverse direction is 120033396 Pa (1224 kgf/cm²), and the porosity of the separator is 40%.

### Comparative Example 2

The preparation process of the lithium ion battery is the same as that in Example 1, except that:

### (4) Preparation of separator

The first porous substrate has a tensile strength in machine direction of 127584516.5 Pa (1301 kgf/cm²), a tensile strength in transverse direction of 166713050 Pa (1700 kgf/cm²), and the second porous substrate has a tensile strength in machine direction of 153964405 Pa (1570 kgf/cm²) and a tensile strength in transverse direction of 195054268.5 Pa (1989 kgf/cm²); the third porous substrate has a tensile strength in machine direction of 127584516.5 Pa (1301 kgf/cm²) and a tensile strength in transverse direction of 166713050 Pa (1700 kgf/cm²); the tensile strength of the separator in the machine direction is 140823494 Pa (1436 kgf/cm²), the tensile strength of the separator in the transverse direction is 170243444 Pa (1736 kgf/cm²), and the porosity of the separator is 50%.

### Comparative Example 3

The preparation process of the lithium ion battery is the same as that in Example 1, except that:

### (4) Preparation of separator

The first porous substrate has a tensile strength in machine direction of 22457228.5 Pa (229 kgf/cm²), a tensile strength in transverse direction of 21182364 Pa (216 kgf/cm²), and the second porous substrate has a tensile strength in machine direction of 36284605 Pa (370 kgf/cm²) and a tensile strength in transverse direction of 35303940 Pa (360 kgf/cm²); the second porous substrate has a tensile strength in machine direction of 22457228.5 Pa (229 kgf/cm²) and a tensile strength in transverse direction of 21182364 Pa (216 kgf/cm²); the tensile strength of the separator in the machine direction is 25791489.5 Pa (263 kgf/cm²), the tensile strength of the separator in the transverse direction is 25791489.5 Pa (263 kgf/cm²), and the porosity of the separator is 55%.

Next, the test process of the lithium ion battery will be described.

### (1) Test for the tensile strength of separator

First, the separator is cut into a sample having a width (W) of 14.5 mm and a length (L) of 100 mm in the machine direction and the transverse direction, respectively, then the separator sample is stretched at a constant rate (v) of 50 mm/min and a clamping distance of 40 mm (S1) using a high-speed tensile machine, and the tensile strengths of the separator in the machine and transverse fractures are recorded separately.

### (2) Test for heat resistance performance of lithium ion battery

The lithium-ion battery is placed in a 130 °C hot box for 1 hour, or in a 140 °C hot box for 1 hour, or in a 150 °C hot box for 3 minutes. If the lithium ion battery does not explode, ignite, smoke, it is defined as "Pass", and five lithium-ion batteries are tested in each group.

### (3) Test for heavy impact of lithium ion battery

The lithium ion battery is charged at a constant current of 0.5 C to a voltage of 4.3 V at 25 °C, and then charged at a constant voltage of 4.3 V to a current of 0.05 C. The UL1642 test standard is adopted, wherein the mass of the hammer is 9.8kg with a diameter of 15.8mm, a drop height of 61±2.5cm and a falling direction parallel to the machine direction of the separator, to perform a heavy impact test on the lithium ion battery. If the lithium ion battery does not explode, ignite, smoke, it is defined as "Pass", and five lithium-ion batteries are tested in each group. Then the pass rate of the heavy impact test for the lithium ion battery is calculated (if 4 batteries pass the heavy impact test, 4|5 is expressed).

The test results are shown in Table 1 below.

**Table 1**

| Table 1 Examples | types of porous substrate (the third porous substrate/the second porous substrate/the first porous substrate) | tensile strength in machine direction in Pa (kgf/cm²) | tensile strength in transverse direction in Pa (kgf/cm²) | porous layer structure | porous layer composition | 130 °C 1h | 140°C 1h | 150 °C, 3min | heavy impact |
|---|---|---|---|---|---|---|---|---|---|
| 1 | PP/PE/PP | 87279185 (890) | 71588545 (730) | / | / | 4\|5 | 4\|5 | 3\|5 | 0\|5 |
| 2 | PVDF/PE/PP | 75805404 .5(773) | 61193496 (624) | / | / | 4\|5 | 3\|5 | 3\|5 | 0\|5 |
| 3 | PVDF/PE/P VDF | 53446242 .5(545) | 47366119 .5 (483) | / | / | 4\|5 | 3\|5 | 2\|5 | 1\|5 |
| 4 | PP/PP/PP | 90515379 .5(923) | 67077486 (684) | / | / | 5\|5 | 415 | 3\|5 | 0\|5 |
| 5 | PI/PP/PA | 46581587 .5(475) | 43737659 (446) | / | / | 3\|5 | 2\|5 | 1\|5 | 1\|5 |
| | | | | | | | | | |
| 6 | PP/PE/PP | 98066500 (1000) | 70705946 .5 (721) | / | / | 5\|5 | 4\|5 | 4\|5 | 0\|5 |
| 7 | PP/PE/PP | 18750314 8(1912) | 61585762 (628) | / | / | 5\|5 | 5\|5 | 5\|5 | 1\|5 |
| 8 | PP/PE/PP | 16696802 2.9(1702. 6) | 12712360 3.95 (1296.3) | / | / | 5\|5 | 5\|5 | 5\|5 | 0\|5 |
| | | | | | | | | | |
| 9 | PP/PE/PP | 76491870 (780) | 17848103 (182) | / | / | 4\|5 | 3\|5 | 3\|5 | 4\|5 |
| 10 | PP/PE/PP | 54917240 (560) | 31391086 .65 (320.1) | / | / | 4\|5 | 3\|5 | 2\|5 | 3\|5 |
| 11 | PP/PE/PP | 66685220 (680) | 39226600 (400) | / | / | 4\|5 | 3\|5 | 3\|5 | 2\|5 |
| 12 | PP/PE/PP | 40501464 .5(413) | 9581097. 05 (97.7) | / | / | 3\|5 | 3\|5 | 2\|5 | 4\|5 |
| | | | | | | | | | |
| 13 | PP/PE/PP | 14512861 3.35(147 9.9) | 17848103 (182) | / | / | 5\|5 | 4\|5 | 4\|5 | 4\|5 |
| 14 | PP/PE/PP | 14249062 4.5(1453) | 33931 009(346) | / | / | 5\|5 | 4\|5 | 4\|5 | 3\|5 |
| 15 | PP/PE/PP | 12712360 3.95(129 6.3) | 19907499 .5 (203) | / | / | 5\|5 | 4\|5 | 4\|5 | 4\|5 |
| 16 | PP/PE/PP | 18613021 7(1898) | 2059396. 5(21) | / | / | 5\|5 | 5\|5 | 5\|5 | 4\|5 |
| 17 | PP/PE/PP | 27733206 2(2828) | 9581097. 05(97.7) | / | / | 5\|5 | 5\|5 | 5\|5 | 5\|5 |
| 18 | PP/PE/PP | 27733206 2(1076) | 37951735 .5(387) | / | / | 5\|5 | 4\|5 | 3\|5 | 2\|5 |
| | | | | | | | | | |
| 19 | PP/PE/PP | 27733206 2(1076) | 37951735 .5(387) | one side | Polyacrylon itrile+Al₂O₃ | 5\|5 | 5\|5 | 5\|5 | 4\|5 |
| 20 | PP/PE/PP | 14512861 3.35(147 9.9) | 17848103 (182) | both sides | Polyacrylon itrile+Al₂O₃ | 5\|5 | 5\|5 | 5\|5 | 5\|5 |
| 21 | PP/PE/PP | 14249062 4.5(1453) | 33931009 (346) | both sides | PTFE+SiO₂ | 5\|5 | 5\|5 | 5\|5 | 5\|5 |
| 22 | PP/PE/PP | 12712360 3.95(129 6.3) | 19907499 .5(203) | both sides | PTFE+Poly acrylonitrile +SiO₂ | 5\|5 | 5\|5 | 5\|5 | 5\|5 |
| 23 | PP/PE/PP | 27733206 2(2828) | 9581097. 05(97.7) | both sides | PTFE+SiO₂ +Al₂O₃ | 5\|5 | 5\|5 | 5\|5 | 5\|5 |

| Comparative Examples | | | | | | | | | |
|---|---|---|---|---|---|---|---|---|---|
| 1 | PP/PE/PP | 12003339 6(1224) | 12003339 6(1224) | / | / | 3\|5 | 2\|5 | 0\|5 | 0\|5 |
| 2 | PP/PE/PP | 14082349 4(1436) | 17024344 4(1736) | / | / | 3\|5 | 2\|5 | 0\|5 | 0\|5 |
| 3 | PP/PE/PP | 25791489 .5(263) | 25791489 .5 (263) | / | / | 1\|5 | 0\|5 | 0\|5 | 1\|5 |

By comparing Examples 1-5 and Comparative Examples 1-3, it is known that by making the tensile strength of the separator in the machine direction greater than the tensile strength of the separator in the transverse direction, and the thermal stability of lithium ion batteries is significantly improved at temperatures of 130 °C, 140 °C and 150 °C.

By comparing Examples 6-8 and Comparative Examples 1-3, it is known that by making the tensile strength of the separator in the machine direction greater than the tensile strength of the separator in the transverse direction, and when the tensile strength of the separator in the machine direction is 9806.65 Pa (1000 kgf/m²) or more, the thermal stability of lithium ion batteries is improved to some extent at temperatures of 130 °C, 140 °C and 150 °C, but the pass rate of the heavy impact test for the lithium ion battery is not significantly improved. Thus, it is indicated that the higher the tensile strength of the separator in the machine direction, the better the thermal stability of the lithium ion battery.

By comparing Examples 9-12 and Comparative Examples 1-3, it is known that by making the tensile strength of the separator in the machine direction greater than the tensile strength of the separator in the transverse direction, and when the tensile strength of the separator in the transverse direction is 3922.66 Pa (400 kgf/m²) or below, the pass rate of the heavy impact test for the lithium ion battery is significantly improved and the safety performance of the lithium ion battery becomes better.

By comparing Examples 13-18 and Comparative Examples 1-3, it is known that by making the tensile strength of the separator in the machine direction greater than the tensile strength of the separator in the transverse direction, when the tensile strength of the separator in the machine direction is 9806.65 Pa (1000 kgf/m²) or more and the tensile strength of the separator in the transverse direction is 3922.66 Pa (400 kgf/m²) or less, the thermal stability of the separator is remarkably improved and the thermal stability of the lithium ion battery is improved. When the lithium ion battery is impact by heavy objects, the lower the tensile strength of the separator in transverse direction, the better the uniformity of the fracture of the lithium ion battery, the less the burr of the fracture, so that risk of short circuit failure caused by the electrode burr is low, thereby improving the safety performance of the lithium ion battery.

By comparing Example 19 and Comparative Example 1, it is known that by making the tensile strength of the separator in the machine direction greater than the tensile strength of the separator in the transverse direction, when the tensile strength of the separator in the machine direction is 9806.65 Pa (1000 kgf/m²) or more, the tensile strength of the separator in the transverse direction is 3922.66 Pa (400 kgf/m²) or less and a porous layer is arranged on a surface of the separator, the thermal stability of the lithium ion battery and the pass rate of the heavy impact test are significantly improved.

By comparing Examples 20-23 and Comparative Examples 1-3, it is known that by making the tensile strength of the separator in the machine direction greater than the tensile strength of the separator in the transverse direction, when the tensile strength of the separator in the machine direction is 9806.65 Pa (1000 kgf/m²) or more, the tensile strength of the separator in the transverse direction is 3922.66 Pa (400 kgf/m²) or less and a porous layer is arranged on both surfaces of the separator, the thermal stability of the lithium ion battery and the pass rate of the heavy impact test are significantly improved, in particular, the improvement of the pass rate of the heavy impact test for the lithium ion battery is most obvious..

## Claims

1. A separator, comprising:
a first porous substrate;
a second porous substrate; and
a third porous substrate;
wherein, the second porous substrate comprises at least one of polyethylene and a tactic polypropylene, and the first porous substrate and the third porous substrate respectively comprise one or more of isotactic polypropylene, polyvinylidene fluoride, polyethylene terephthalate, cellulose, polyimide, polyamide, spandex, and polyphthalaldehyde phenyl diamine,
wherein the second porous substrate is arranged between the first porous substrate and the third porous substrate, and a tensile strength of the separator in a machine direction is greater than a tensile strength of the separator in a transverse direction, and
wherein the tensile strength is determined as follows: first, the separator is cut into a sample having a width (W) of 14.5 mm and a length (L) of 100 mm in the machine direction and the transverse direction, respectively, then the separator sample is stretched at a constant rate (v) of 50 mm/min and a clamping distance of 40 mm (S1) using a high-speed tensile machine, and the tensile strengths of the separator in the machine and transverse fractures are recorded separately, **characterized in that**
the tensile strength of the separator in the machine direction is 9806.65 Pa ∼ 29419.95 Pa (1000 kgf/m²∼3000 kgf/m²) and
the tensile strength of the separator in the transverse direction is 196.133 Pa ∼ 3922.66 Pa (20 kgf/m²∼400 kgf/m²).

2. The separator according to claim 1, **characterized in that** the first porous substrate has a melting point of 150 °C to 350 °C, the second porous substrate has a melting point of 110 °C to 150 °C, and the third porous substrate has a melting point of 150 °C to 350 °C.

3. The separator according to claim 1, **characterized in that** the separator further comprises a porous layer arranged on at least one surface of the separator.

4. The separator according to claim 3, **characterized in that** the porous layer comprises a binder and an inorganic particle, the binder is selected from one or more of vinylidenefluoride-hexafluoropropylene copolymer, vinylidene fluoride-trichloroethylene copolymer, polymethyl methacrylate, polyacrylic acid, polyacrylate, polyacrylonitrile, polyvinylpyrrolidone, polyvinyl acetate, ethylene-vinylidene acetate copolymer, polyimide, polyethylene oxide, cellulose acetate, cellulose acetate butyrate, cellulose acetate propionate, cyanoethyl amylopectin, cyanoethyl polyvinyl alcohol, cyanoethyl cellulose, cyanoethyl sucrose, amylopectin, sodium carboxymethyl cellulose, lithium carboxymethyl cellulose, acrylonitrile-styrene-butadiene copolymer, polyvinyl alcohol, polyvinyl ether, polytetrafluoroethylene, polyhexafluoropropylene, styrene-butadiene copolymer and polyvinylidene fluoride.

5. The separator according to claim 4, **characterized in that** the inorganic particle is selected from one or more of alumina, silica, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide and barium sulfate.

6. A lithium ion battery, comprising a separator as defined in any of the preceding claims.

## Patentansprüche

1. Separator, umfassend:
ein erstes poröses Substrat;
ein zweites poröses Substrat; und
ein drittes poröses Substrat;
wobei das zweite poröse Substrat mindestens eines aus Polyethylen und einem taktischen Polypropylen umfasst, und das erste poröse Substrat und das dritte poröse Substrat jeweils eines oder mehrere aus isotaktischem Polypropylen, Polyvinylidenfluorid, Polyethylenterephthalat, Cellulose, Polyimid, Polyamid, Elastan und Polyphthalaldehydphenyldiamin umfassen,
wobei das zweite poröse Substrat zwischen dem ersten porösen Substrat und dem dritten porösen Substrat angeordnet ist und eine Zugfestigkeit des Separators in Maschinenrichtung größer ist als eine Zugfestigkeit des Separators in einer Querrichtung, und
wobei die Zugfestigkeit wie folgt bestimmt wird: zuerst wird der Separator in eine Probe mit einer Breite (W) von 14,5 mm und einer Länge (L) von 100 mm entsprechend in Maschinenrichtung und Querrichtung geschnitten, dann wird die Separatorprobe mit einer konstanten Rate (v) von 50 mm/min und einem Spannabstand von 40 mm (S1) unter Verwendung einer Hochgeschwindigkeitszugmaschine gedehnt, und die Zugfestigkeiten des Separators in den Maschinenfrakturen und Querfrakturen werden separat aufgezeichnet, **dadurch gekennzeichnet, dass**
die Zugfestigkeit des Separators in Maschinenrichtung 9806,65 Pa ∼ 29419,95 Pa (1000 kgf/m²∼3000 kgf/m²) und
die Zugfestigkeit des Separators in Querrichtung 196,133 Pa ∼ 3922,66 Pa (20 kgf/m²∼400 kgf/m²) beträgt.

2. Separator nach Anspruch 1, **dadurch gekennzeichnet, dass** das erste poröse Substrat einen Schmelzpunkt von 150 °C bis 350 °C, das zweite poröse Substrat einen Schmelzpunkt 110 °C bis 150 °C und das dritte poröse Substrat einen Schmelzpunkt 150 °C bis 350 °C hat.

3. Separator nach Anspruch 1, **dadurch gekennzeichnet, dass** der Separator ferner eine poröse Schicht umfasst, die auf mindestens einer Oberfläche des Separators angeordnet ist.

4. Separator nach Anspruch 3, **dadurch gekennzeichnet, dass** die poröse Schicht ein Bindemittel und einen anorganischen Partikel umfasst, wobei das Bindemittel ausgewählt ist aus einem oder mehreren aus Vinylidenfluoridhexafluorpropylencopolymer, Vinylidenfluoridtrichlorethylencopolymer, Polymethylmethacrylat, Polyacrylsäure, Polyacrylat, Polyacrylnitril, Polyvinylpyrrolidon, Polyvinylacetat, Ethylenvinylidenacetatcopolymer, Polyimid, Polyethylenoxid, Celluloseacetat, Celluloseacetatbutyrat, Celluloseacetatpropionat, Cyanethylamylopektin, Cyanethylpolyvinylalkohol, Cyanethylcellulose, Cyanethylsaccharose, Amylopektin, Natriumcarboxymethylcellulose, Lithiumcarboxymethylcellulose, Acrylnitrilstyrolbutadiencopolymer, Polyvinylalkohol, Polyvinylether, Polytetrafluorethylen, Polyhexafluorpropylen, Styrolbutadiencopolymer und Polyvinylidenfluorid.

5. Separator nach Anspruch 4, **dadurch gekennzeichnet, dass** der anorganische Partikel ausgewählt ist aus einem oder mehreren aus Aluminiumoxid, Kieselsäure, Magnesiumoxid, Titanoxid, Hafniumdioxid, Zinnoxid, Ceroxid, Nickeloxid, Zinkoxid, Calciumoxid, Zirkoniumoxid, Yttriumoxid, Siliziumcarbid, Boehmit, Aluminiumhydroxid, Magnesiumhydroxid, Calciumhydroxid und Bariumsulfat.

6. Lithiumionenbatterie, umfassend einen wie in einem der vorhergehenden Ansprüche definierten Separator.

## Revendications

1. Séparateur, comprenant :
un premier substrat poreux ;
un deuxième substrat poreux ; et
un troisième substrat poreux ;
dans lequel le deuxième substrat poreux comprend au moins l'un parmi le polyéthylène et un polypropylène tactique, et le premier substrat poreux et le troisième substrat poreux comprennent respectivement un ou plusieurs parmi le polypropylène isotactique, le fluorure de polyvinylidène, le téréphtalate de polyéthylène, la cellulose, le polyimide, le polyamide, le spandex et la polyphtalaldéhydephényle diamine ;
dans lequel le deuxième substrat poreux est agencé entre le premier substrat poreux et le troisième substrat poreux, et une résistance à la traction du séparateur dans une direction de fabrication par machine est supérieure à une résistance à la traction du séparateur dans une direction transversale ; et
dans lequel la résistance à la traction est déterminée comme suit : en premier lieu, le séparateur est découpé selon un échantillon qui présente une largeur (W) de 14,5 mm et une longueur (L) de 100 mm respectivement dans la direction de fabrication par machine et dans la direction transversale, puis l'échantillon de séparateur est étiré à une vitesse constante (v) de 50 mm/min et sur une distance de serrage de 40 mm (S1) en utilisant une machine de traction haute vitesse, et les résistances à la traction du séparateur au niveau des fractures de directions de fabrication par machine et transversale sont enregistrées séparément ;
**caractérisé en ce que** :
la résistance à la traction du séparateur dans la direction de fabrication par machine est de 9806,65 Pa à 29419,95 Pa (de 1000 kgf/m² à 3000 kgf/m²) ; et
la résistance à la traction du séparateur dans la direction transversale est de 196,133 Pa à 3922,66 Pa (de 20 kgf/m² à 400 kgf/m²).

2. Séparateur selon la revendication 1, **caractérisé en ce que** le premier substrat poreux présente un point de fusion de 150 °C à 350 °C, le deuxième substrat poreux présente un point de fusion de 110 °C à 150 °C et le troisième substrat poreux présente un point de fusion de 150 °C à 350 °C.

3. Séparateur selon la revendication 1, **caractérisé en ce que** le séparateur comprend en outre une couche poreuse qui est agencée sur au moins une surface du séparateur.

4. Séparateur selon la revendication 3, **caractérisé en ce que** la couche poreuse comprend un agent de liaison et une particule inorganique, et l'agent de liaison est sélectionné parmi un ou plusieurs de copolymère fluorure de vinylidène-hexafluoropropylène, copolymère fluorure de vinylidène-trichloréthylène, méthacrylate de polyméthyle, acide polyacrylique, polyacrylate, polyacrylonitrile, polyvinylpyrrolidone, acétate de polyvinyle, copolymère éthylène-acétate de vinylidène, polyimide, oxyde de polyéthylène, acétate de cellulose, butyrate d'acétate de cellulose, propionate d'acétate de cellulose, amylopectine de cyanoéthyle, alcool de polyvinyle cyanoéthylique, cyanoéthylcellulose, cyanoéthylsucrose, amylopectine, carboxyméthylcellulose de sodium, carboxyméthylcellulose de lithium, copolymère acrylonitrile-styrène-butadiène, alcool polyvinylique, polyvinyléther, polytétrafluoréthylène, polyhexafluoropropylène, copolymère styrène-butadiène, et fluorure de polyvinylidène.

5. Séparateur selon la revendication 4, **caractérisé en ce que** la particule inorganique est sélectionnée parmi un ou plusieurs de alumine, silice, oxyde de magnésium, oxyde de titane, dioxyde d'hafnium, oxyde d'étain, oxyde de cérium, oxyde de nickel, oxyde de zinc, oxyde de calcium, oxyde de zirconium, oxyde d'yttrium, carbure de silicium, boehmite, hydroxyde d'aluminium, hydroxyde de magnésium, hydroxyde de calcium et sulfate de baryum.

6. Batterie aux ions de lithium, comprenant un séparateur tel que défini selon l'une quelconque des revendications précédentes.
